Europäisches Patentamt

European Patent Office

Office européen des brevets

(11) Publication number: **0 472 802 A2**

# EUROPEAN PATENT APPLICATION

(21) Application number: **90830613.7**

(22) Date of filing: **21.12.90**

(51) Int. Cl.5: **G11B 5/86, G11B 20/10**

(30) Priority: **31.08.90 IT 2135790**

(43) Date of publication of application:
**04.03.92 Bulletin 92/10**

(84) Designated Contracting States:
**AT BE CH DE DK ES FR GB GR LI LU NL SE**

(71) Applicant: **BERNARDINI S.r.l.**
**Via Mario Pagano 47**
**I-20145 Milano (MI)(IT)**

(72) Inventor: **Bernardini, Bernardino**
**Via Privata Bartolozzi 19**
**Milano(IT)**

(74) Representative: **Righetti, Giuseppe**
**Bugnion S.p.A. Via Carlo Farini, 81**
**I-20159 Milano(IT)**

(54) Electronic device for the fast duplication of magnetic tapes.

(57) The present invention falls within the technical field of devices for the duplication of industrial magnetic tapes and particularly it refers to an electronic device (50) for the fast duplication of magnetic tapes, a static storage bank (4) is located in this electronic device (50), said bank (4), through a microprocessor (10) outside the device (50), allows to activate selecting units (8,9), each unit (8 or 9) controls each storage cards (2,3) of the storage bank (4), generating, at the output of said units (8,9), proceeding signals (18-18e,23-23e) and selecting signals (17,19) which single out storage cells of the storage bank (4) for the writing and the reading; these selecting signals (14,19) and proceeding signals (18-18e,23-23e) cause a subdivision of the cards (2,3) in the storage bank (4), allotting a part of the memory for the reading and another part for the writing; the selecting and the proceeding signals are carried out through digital signals (11a); instead the signals give at the output of the device (50), are subjected to a digital-to-analog conversion.

FIG.1

It is an object of the present invention an electronic device for the fast duplication of magnetic tapes of the kind comprising an input data unit galvanically connected to a circuital box, that comprises storage address means and storage means, these means are connected together and are operated by a microprocessor, said datas are then sent at the output of said device, after having been subjected to a digital-to-analog conversion, to an end user.

As it is known, in the fast duplication of magnetic tapes of the industrial production, the sounds are before recorded on magnetic tapes of the professional type, (this means they are suited to systems that date to their recording speed, are proper for every kind of previous processing, such as assemblies, equalization, etc.), and aferwards these tapes are recorded on stereophonic tracks. Each of these tapes usually has been loaded with just one program that can be formed by a limited number of single musical pieces or it can be formed by just one musical piece of suitable length or can include a selection of limited pieces.

The magnetic tapes to be produced on industrial scale must have characteristics which make them suited to be used on appliances intended for a large sale.

The recording speed of said tapes is just a fraction of the speed of the tapes recorded in the standard recording studios.

In this way, very long programs are contained in a reduced size and the quality of the produced sound approaches much the quality requested by the market. Usually, the manufacturing method, on a large scale, foresees a sequence of duplicating stages as explained after.

A copy is obtained from the professional tapes on an intermediate tape, the intermediate tape is recorded at a speed that is intermediate between the speed of the professional tapes and the speed of the final products, on the intermediate tape there are recorded the programs that will be included in the final product, that is represented by another magnetic tape.

This intermediate tape has a plurality of recorded tracks, at least one for each stereophonic program, and, in this field this tape is usually called "master" tape.

The intermediate tape is reproduced on a proper reading recorder at a speed that is much higher than the speed at which the tape was recorded (generally 64 times higher, but sometimes much more). If the output of the reading recorder is connected to a recorder, whose speed is for example 64 times greater than the speed at which the final product will be listened, the copy of an hour of sound will be otained in about 28 seconds.

Due to this method, the frequencies of the sound are automatically muliplied by the same speed factor, said frequencies are usually comprised between 30 and 18.000 Hertz.

Often, the master tape is rolled up like a loop, in this way it can be read without solution of continuity. Each entire turn of the tape represents a corresponding entire program which is recorded at the same time on a recorder. This kind of recorder is called "slave", some of these recorders are connected to the outputs of the reading recorder and therefore it is possible to obtain more copies. Therefore, the number of the copies corresponds, for each passage of the master tape, to the number of the recorders located at the output of the reading recorder.

Briefly stated, sounds are before recorded on professional tapes, in this way they can receive all the operations necessary to make them duplicatable, then the sounds are transferred in two by two, according to the standards that are today in force, on an intermediate master tape and only at this point the industrial production can be started.

At the present time, DAT (Digital Audio Tape) are preferred to be used instead of the analog master tapes.

A first drawback of the prior art is represented by the fact that these duplicating systems have several movable members, which are represented by the tapes of the different recorders forming the duplicating system, these tapes wear out because they are subjected to a large number of passages due to the duplication.

For this reason, in the long run, the tapes are subjected to qualitative changes and therefore gradually they cannot more insure a duplication that has the same level of homogeneity of the duplication of the early stages.

In the production, programs of medium length are alternated with very short programs and with programs which have the maximum length allowed by the standard used.

In fact, from the examination of the programs which are generally duplicated, it can be noted that usually the majority of the programs has lengths that are shorter than half of the maximum allowed length, many programs have shorter lengths than half of the maximum lengths and only a very small fraction approaches the maximum allowed length.

This means that the capacity of the tapes, on which are loaded the programs to be duplicated, is not entirely and continuously used, because it is not possible to load the whole tape in order to completely fill the tape with one or more programs.

Despite the fact that during the duplication it is foreseen an analog-to-digital conversion and viceversa, neither the digitization allows to overcome these limits of the prior art, as it will be explained.

In fact, the digitization is imposed by the presence on the market of highly diffused supports for digital sounds, such as compact disk, which urges the manufacturers of recorded sounds to spread more and more the use of digital systems in all the sound duplication stages even though the recording of the final product, such as a cassette is of the analog type.

However, referring to what said above, the problem for sounds recorded in a digital way, is greatly complicated by the fact that there are normally not on the market reading recorders for sounds recorded in a digital way, which can be operated at a speed higher than the speed at which the sounds were recorded. Therefore the reading recorders have to operate at a speed ratio equal to zero. This is due to the presence of movable mechanical members in the commercially available reading recorders.

Briefly stated, though the duplication carried out by the prior art allows to speed up the programs to be duplicated, two basic limits still exist which have not been overcome. These limits essentially consist in the poor utilization of the storage supports on which are loaded the programs during the duplicating stages, and in the kind of the support that is represented by the tapes, which being movable members, are subjected to wear and therefore they are subjected to a qualitative degeneration of the program loaded on said tapes.

Therefore, the embodiments of the prior art allow to carry out the reproduction of the information of the master tape, the corresponding recording on a magnetic support, the analog-to-digital conversion and viceversa and the recording, in an analog form, on the final support. A microprocessor runs all the foregoing phases, said microprocessor controls the synchronization corresponding to the recording on the magnetic supports of the datas to be recorded and the analog-to-digital and digital-to-analog conversion.

It is an object of the present invention to eliminate the above mentioned drawbacks.

This and further objects, which will become more apparent in the following, are substantially attained, according to the present invention, by an electronic device for the fast duplication of magnetic tapes as it is claimed in the first claim.

By means of this embodiment, that uses storages of the static type, it is possible to obtain a better utilization of the storage supports of the storage means located in the device, and to avoid the utilization of movable members.

Advantageously, by means of the device, according to the present invention, it is possible to carry out duplications of magnetic tapes which operate at frequencies different from the standard frequency.

Further features and advantages will be better understood from the detailed description of a preferred embodiment of the invention given hereinafter by way of no-limiting example, of art electronic device for the fast duplication of magnetic tapes, with reference to the accompanying drawings, in which:

- Fig. 1 shows a block diagram of the whole device according to the present invention;
- Fig. 2 shows driving signals which goes to a storage bank located in the device according to the present invention;
- Fig. 3 is a block diagram which shows address and proceeding signals which activate desired storage cells;
- Fig. 4 shows a selection of proceeding signals which activate a storage bank according to the present invention;
- Fig. 5 shows a form of the embodiment for changing the variation of a sampling frequency of an input digital data flow according to the present invention.

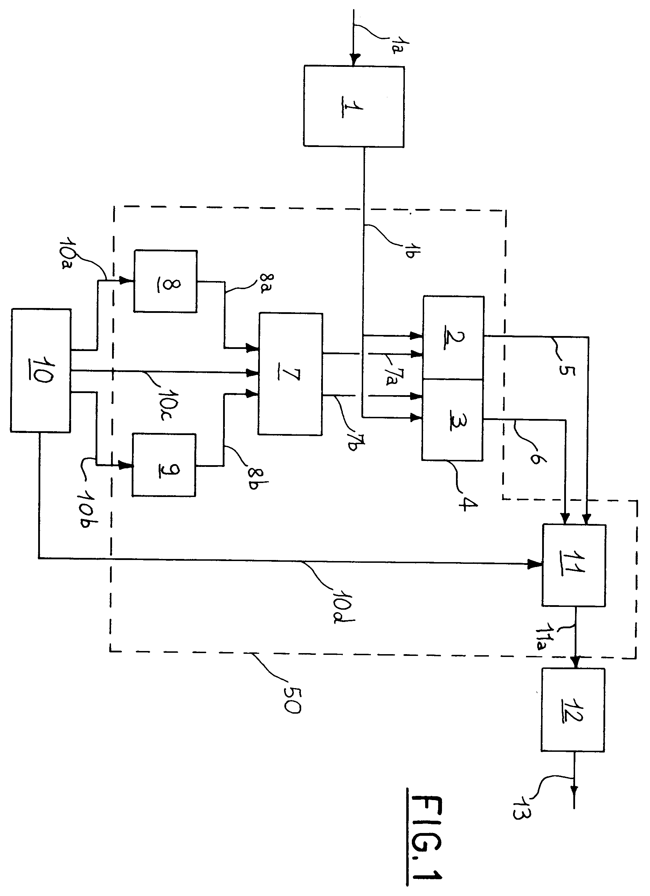

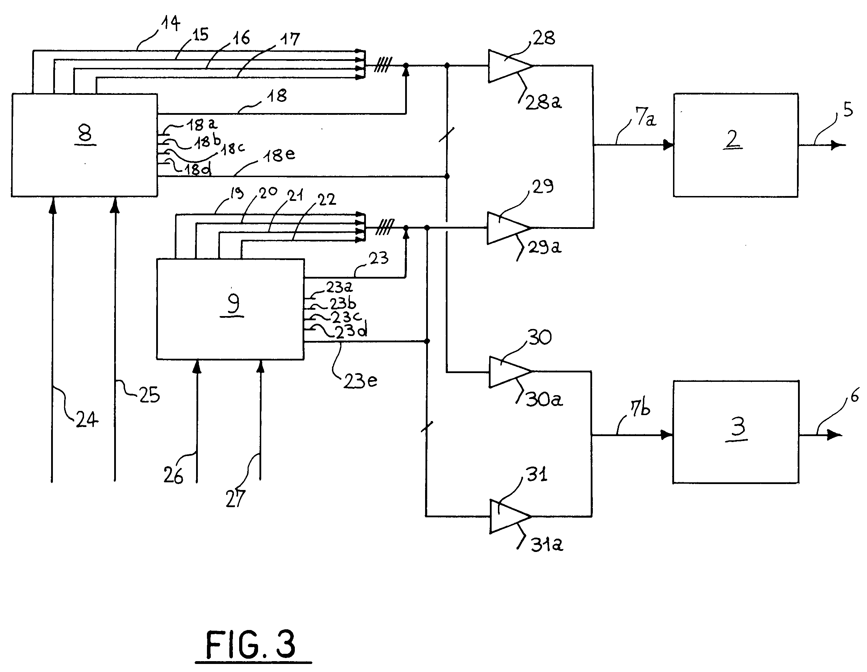

Referring to figure 1, an input data unit has been identified by reference numeral 1, the unit can be physically represented by a digital reading recorder, input digital datas 1a, represented by sounds, are introduced into the unit 1.

Datas, represented by reference numeral 1b, goes out from unit 1, these datas are merely the sounds which must be stored in storages of the device of the present invention. The device, in figure 1, is altogether represented and shown by a dashed line 50 that includes the constituent and characterizing elements.

Then, datas 1b are sent to a storage bank 4 physically formed by storage cards, shown in figure by reference numerals 2 and 3.

The storage bank 4 can be also formed by more than two storage cards; however, usually, some of these cards are used as a reserve storage, in case the subdivision arranged for the storing of the program to be duplicated were not enough and consequently it would rise the necessity to have the availability of a further storage subdivision.

The storage cards 2 and 3 generate output datas, represented in figure by lines 5 and 6, which are the digitized datas which are then sent to an end user, that is represented in figure by reference numeral 13 that is a tape usually on sale.

The storage bank 4 is run through a single microprocessor 10, that, by means of signals 10a, 10b, 10c and 10d, allows to control a selecting unit 8 of the storage card 2, a selecting unit 9 of the storage card 3, a switching unit 11 and a multiplexer 7 respectively.

Obviously, each selecting unit 8 and 9 generates corresponding signals 8a and 8b, said signals are used by the multiplexer 7 to address and choose the foreseen location in the corresponding storage cards 2 and 3, through output signals 7a and 7b.

The signal 10b of the microprocessor 10 activates the switching unit 11 that is merely another multiplexer, that is an electronic switching unit.

At the output of the unit 11 there are digital signals 11a, which, through a digital-to-analog conversion circuit 12, are sent to the end user 13 as analog signals, as are usually used in the market.

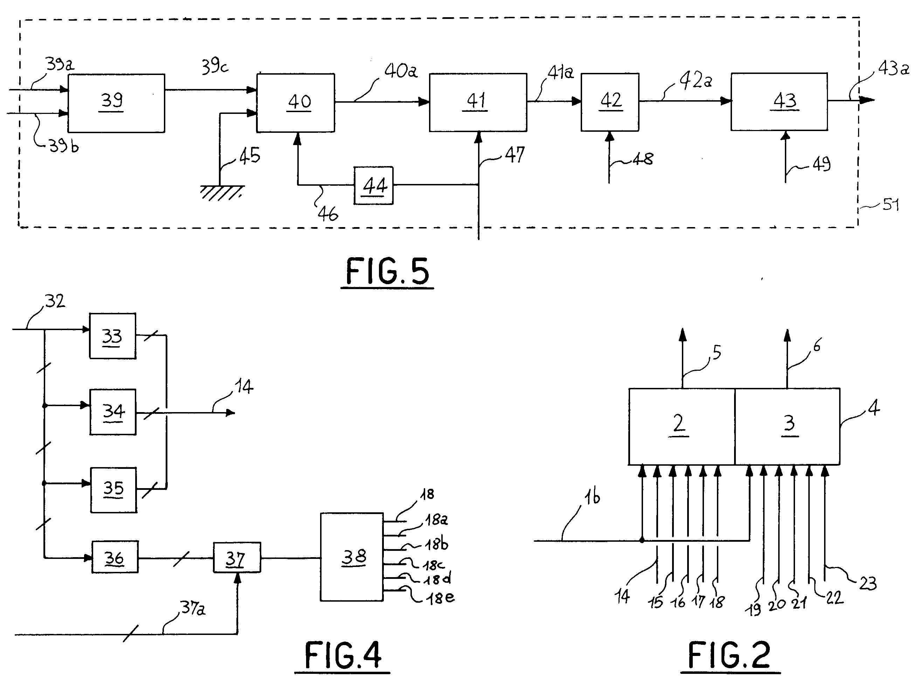

In figure 2, the signals which are sent to the storage cards 2 and 3, are represented more specifically. In this figure, besides the datas 1b, which come from the input data unit 1, there are shown the signals entering the storage cards 2 and 3, said signals are collectively and respectively represented in figure 1 by reference numerals 7a and 7b.

Reference numerals 14, 15, 16, 17 and 18 represent signals entering the storage card 2. More specifically, 14 represents address selecting signals, some of them goes directly to the single storage cells, the others are used for the selection of the storage card inside the storage bank 4. Reference numeral 15 represents writing and reading driving signals for the same storage cards; numerals 16 and 17 represent timing signals necessary to the storage card 2 for carrying out the writing and reading phase; numeral 18 represents a proceeding signal for the entire storage card 2.

In the same way, for the storage card 3, signals represented by reference numerals from 19 to 23 are respectively signals of the same kind of the above mentioned signals represented by numerals from 14 to 18.

The signals from 14 to 18 and from 19 to 23 and the selecting units 8 and 9 are shown in figure 3.

Referring to the unit 8, there are signals 24 and 25 at its input. Reference numeral 24 represents a clock signal, that is the timing clock for giving cadence to the time and reference numeral 25 represents driving signals coming from the microprocessor 10. The signals 24 and 25, in figure 1, are represented altogether by line 10a.

The microprocessor 10 also enables to detect possible anomalies on signals coming from unit 1, in order to be able to remove all parts that cannot be correctly reproduced from the whole recording, thereby avoiding cassettes of bad quality being marketed.

Referring to the unit 9, the signal that in figure was represented by 10b, now is more specifically represented by lines 26 and 27. Lines 26 and 27 represent a clock signal and a driving signal of the microprocessor 10 respectively.

At the output of the units 8 and 9 there are the signals 8a and 8b which go to the input of the multiplexer 7, and which respectively coincide with the signals 7a and 7b at the output of said multiplexer.

In figure 3, there are shown, by reference numerals from 18a to 18e, further proceeding signals, besides the above mentioned signal 18, at the output of the unit 8. These signals represent the different enablings, each enabling depends on the decodification of the storage addresses, chosen according the structure of the storages located in the device 50.

More specifically, since there are different storage addresses for each address, a specific enabling is necessary, that is generated by the the unit 8 or 9 with reference to the corresponding storage field of the storage cards 2 and 3.

In figure 3, there are represented the proceeding signals from 18 to 18e for the unit 8 and the proceeding signals from 23 to 23e for the unit 9. Then, each of these proceeding signals goes to a selecting circuit, containing gate circuits 28, 29, 30 and 31 of the three-state buffer type, which, operating in parallel, determine the selection, towards the corresponding storage cards 2 or 3, through signals 28a, 29a, 30a and 31a, respectively.

The signals 28a, 29a, 30a and 31a represent the selecting word that is given by the microprocessor 10 and said word is a function of the desired subdivision.

In this way, the output signal 7a or 7b, corresponding to the storage cards 2 or 3, allows to address a specific cell without rising any clashing.

Briefly stated, the above mentioned signals represent the selecting signals for looking for the desired subdivision in the storage cards according to whether one wants to read or write in the same storage.

Instead, figure 4 refers to the proceeding signals. In this figure, a clock signal 32 activates corresponding counters 33, 34, 35 and 36, which generate, at their output, an address selecting signal 14 for the request of the storage location. However, the signals 18-18e are a function of the firmware loaded in a PROM storage 37, activated by a signal 37a, coming from the microprocessor 10. Said firmware contains the transcodification of the storage addresses in function of the desired subdivision.

The address that is determined by the signal 14, as said before, is a function of a decodification of the addresses which have the higher value among all the addresses of the storage, according to the circuit structure shown in figure 4, so a corresponding decoder 38 generates a sequence of proceeding signals from 18 to 18e, which refer to the selecting unit 8. The same description can be done for the selecting unit 9 with the signals from 23 to 23e, even though the corresponding circuits have not been shown in the figure. In this way, varying the generating sequence of the proceeding signals, the storage addresses are not always counted from the first one, but more precisely from the address that is necessary to be singled out for drawing the subdivision in the memory, that one desires to use for the duplication.

Figure 5 shows a further embodiment of the present invention, in this embodiment it is foreseen a variation of the sampling frequency of the flow of input datas 39a, through sampling circuits 51.

At the input there are data clock signals, represented by a line 39b. The data signals 39a are loaded on a buffer 39, that generates on its output a signal 39c that is switched by a multiplexer 40, that has at its input a reference signal 45, represented by a sample signal with no value and a signal 46 coming from a counter 44.

At the output of the multiplexer 40, there is a signal 40a that loads another buffer 41, that receives a clock signal 47, multiplied by a new sampling coefficient, that represents the frequency variation.

In this way, a signal 41a has been generated, said signal is then filtered by a filter 42, that is a digital filter subjected to a timing by a clock frequency signal 48, represented by the input data clock signals 39b multiplied for the above mentioned frequency variation.

Lastly, there is a last buffer 43 where new signals 42a are loaded and a new output signal 43a is carried out through a sampling frequency signal 49, said signal 43a represents the new desired sampling that is a submultiple of the input frequency, whose features will be explained in the description of the operation of the present invention.

After having described the structure of the device of the present invention, it will be given its operation in the following description.

First of all, it is necessary to show that the device 50 has no more movable members, but there are only static elements, among them we would like to point out the static storage cards 2 and 3, in these storage cards are loaded, by means of the input data unit 1, the sounds, which must then be unloaded on the end user 13.

These storage cards 2 and 3 can be subdivided, through selecting signals coming from the selecting units 8 and 9 and can be switched, through an electronic switching circuit represented by the multiplexer 7, that is directly connected to the inputs of the storage cards 2 and 3. In the same way, it is necessary another multiplexer at the output of the storage cards 2 and 3, represented by the switching circuit 11, that is used to distribute the signals given at the outputs of the storage cards 2 and 3.

In figure 1 the storage bank 4 is represented by the storage cards 2 and 3, but obviously they can be multiplied depending on the necessities of the capacity of the storage that is requested by the duplication.

As said before, in figure 2, at the input of the storage card 2 there is an address selecting signal 14, part of this signal goes directly to the single storage cells of the storage card 2 while another part of the signal, through a decoder 38 shown in figure 4, goes inside the same card 2 of the selected storage bank 4. Instead, the signals 15 at the input of the storage card 2, represent writing and reading driving signals of the storages, while signals 16 and 17 represent timing signals necessary for the storages to follow the different writing and reading cycles.

The signal 18 is a proceeding signal for the entire card 2. What said above, is also true for the input signals 19, 20, 21, 22, 23 of the storage card 3. When the storage card is subjected to the reading phase, the presence of datas 1b at the input, which is important during the writing phase, now their presence is not significant, but it allows to connect all the storage cards to the datas, represented by the line 1b of figure 1.

The same can be said for the output datas, represented by the lines 5 and 6 of figure 1, which can be connected in parallel, because each card gives said datas only when it is enabled and during the reading phase. Therefore, if one wants to write some of the datas in the same storage bank and wants to read other datas from another storage bank, there is no clashing between the datas 5 and 6.

Therefore, the subdivision of the storage cards 2 and 3, among those used for the writing signals and those used for the reading signals, occurs by the multiplexer 7, through a programmed switching between the driving signals coming from the microprocessor 10 and the address coming from the selecting unit 8 and 9.

The output signal frequency towards the storage cards 2 and 3 is set up by the clock signal 24, for the selecting unit 8, and through the clock signal 26 for the selecing unit 9.

Obviously, also the signals, which run the timings, come from the microprocessor 10. Selecting words $A_1$ and $A_n$, coming from the selecting unit 8 and 9, are given by the microprocessor 10, that allows or not the enablings, operating on the signal digitization.

The selecting word is represented in figure 3 by signals 28a, 29a, 30a and 31a.

If, for example, one wants to carry out a subdivision 4 + 6 by means of ten storage cards, it will be set up a word from $A_1$ to $A_{10}$, where the value of the words $A_1$-$A_4$ is zero while the value of the words $A_5$-$A_{10}$, is one.

This obviously allows to determine some enablings and to eliminate other enablings and therefore it allows a subdivision of the storage cards 2 and 3.

Each selecting unit 8 and 9 generates a number of enablings equal to the number of the storage cards located in the device that, in this specific case, are the two cards 2 and 3.

It is necessary to specify that the datas going out from the storage cards 2 and 3, represented by lines 5 and 6, are present when it is carried out a reading cycle with the enabled storage card, otherwise the output shows a high impedence and consequently the storage card is not enabled and therefore this fact means that the storage card is subjected to a writing cycle or is in a stand-by condition.

When the storage card is subjected to a reading cycle, the presence of the input datas 1b that it is important for the writing cycle, it is no significant for the reading cycle, as said before.

Briefly stated, in figure 3 it has been shown that signals 7a and 7b can arrive at the input of storage cards 2 and 3, said signals are given by the circuits 28, 29, 30 and 31 in function of the proceeding signals from 18 to 18e and from 23 to 23e of the selecting units 8 and 9. In this way the selecting words, represented in figure by signals 28a, 29a, 30a and 31a determine at the output the signal of greater value in relation to the subdivision that one wants to set up in the storage.

The proceeding signals are specified in the circuits represented in figure 4. In these circuits, the signals, which are determined by the decoder 38, have been shown, said decoder decodes the addresses which has the higher value among the addresses of the storage according to a cascade represented by the counters from 33 to 36. In this way, by means of PROM 37, it is possible to change the generating sequence of the proceeding signals. In fact, referring to the example cited above 4 + 6, the selecting unit 9 must generate a selecting signal in correspondence of the lower address, that is in correspondence of the proceeding corresponding to the word $A_5$, while the select- ing unit 8 must generate a selecting signal corresponding to the address 1, that is in correspondence to the first proceeding signal.

Also the selecting bits come due to a command of the microprocessor 10.

Obviously, what is shown in figure 4, referring to the selecting unit 8 is equivalent with perfect simmetry, also to the selecting unit 9 with the signal 19 and the proceeding signals 23-23e.

Therefore, referring to figure 3, it is possible to determine a significant selecting word that depends on the signal that has the higher value between the circuit 28 and the circuit 29 in relation to the selecting unit 8 and between the circuits 30 and 31 in relation to the selecting unit 9. This selecting word addresses the desired subdivision in the respective storage cards 2 and 3 and therefore the corresponding output datas 5 and 6, which represent the desired effect.

Instead, in figure 4 there are shown the storage addresses for singling out the storage cell on which the information is loaded, that is the datas or the signals, which until now were called sounds. In this way, through the counters from 33 to 36, in function of the decoder 38 and of the PROM 37 enabled by a selecting signal 37a, the address output signals are determined, these signals then go in the corresponding storage cards (in the specific case of the figure in the storage card 2, but in the case of the storage card 3 the signals would be represented by the line 19), in order to single out and to subdivide the storage card as it is desired between the writing and the reading.

Giving this subdivision as shown, that is the digitization by the zeros and the ones, it is possible to subdivide, as desired, the storage bank 4, represented, in the specific example by the storage cards 2 and 3. Moreover, even though it is not shown in the figure, it is possible to reserve in the storage bank 4 part of the card 2 or the card 3 or both the cards as a backup storage, that is a reserve storage, in the case the set up subdivision would be insufficient, for different reasons, in relation to the length of the program that should be loaded. This is particularly true for the writing phase, that consists of the loading of the input datas.

In this way, the present invention attains the intended purposes. In fact, using the static storage cards 2 and 3, it has been avoided the use of movable members, which are represented by master tapes, said tapes were arranged as a loop, causing in this way, as said at the beginning, the qualitative wear out of the signal datas.

The static storage cards insure, until there is power supply, the recording of the loaded content and therefore a perfect qualitative adhesion of the content at the input to the content at the output. The content is then loaded on the end user 13.

Moreover, by means of the control of the microprocessor 10, but expecially by means of the selecting units 8 and 9 and by the multiplexer 7, it is possible therefore to subdivide the storage cards 2 and 3, reserving part of them for the reading and part for the writing depending on the given selecting word, that is the value given to said word by numerical standards of the digital decision 0-1. This fact allows a better use of the storage cards and speeds up further the duplication method, because it eliminates starting dead times due to the digital loading of the input data unit 1. In fact, at the same time, the output unit can operate at high speed, while the input data unit loads; this means that the reading phase and writing phase are carried out simultaneously for different data contents and in different subdivisions of the storages.

Advantageously, it is also possible to vary the sampling frequency of the flow of the input datas 1b in order to comprise all the cases that are present now on the world market.

In fact, usually the digital words are loaded at the standard frequency of 44.1 KHz in a buffer 39, located at the output of the data unit 1.

In the period corresponding to the frequency of 44.1 KHz of the input flow 39a many sampling frequencies are fixed and, in correspondence to these sampling frequencies, times are single out, which are considered sample times of a value that is equal to zero.

The sequence of the sample times, comprising the sample times of value equal to zero, is timed at a frequency that is n time greater through a clock signal 47, and is filtered by the filter, represented in figure by a box 42, this filter is a digital low-pass filter with a cutoff frequency equal to the maximum infralow frequency that is intended to sense.

At the output of such filter 42, the sample signals of the input signal are rebuilt, and therefore at this point they are sent at the output with the signals 42a at a different timing from the input timing 39c.

In fact, in figure 5 the reference numeral 39 shows the input buffer before the sampling and afterwards the buffer 41 is loaded with the datas multiplied by the multiplexer 40 with a clock frequency that is n times greater than the input frequency of the signals 39b, using the counter 44, the reference signal 45 and the clock signal 47.

The signals are filtered by the filter 42 that is a filter that operates at the frequency of clock signal 48, said frequency is equal to the frequency entering the buffer 41.

In this way, the end buffer 43 is loaded with the datas which are timed by the frequency of the signal 49 that is the frequency of the buffer 41 divided for the desired sampling points.

For example, if n is worth 8, the new frequency is 44.1 x 8/9, that is 39.1 KHz, this is a new desired sampling frequency that can be proper for appliances which are different from the standard ones.

In this way, putting these sampling circuits, represented by a dashed line 51 in figure 5, at the input between the unit 1 and the device 50, it is possible to operate the device according to the present invention also with frequencies different from the standard frequency, so taht, with the same storage capacity, it is possible to load more datas in the storage cards 2 and 3.

Obviously, further modifications can be made both to the parameters and to the circuits, all the modifications falling within the inventive scope of the present invention.

## Claims

1. Electronic device for the fast duplication of magnetic tapes of the type comprising an input data unit (1) galvanically connected to a circuit box, address storage means and storage means are located in said box, these means are connected together and are operated by a microprocessor (10), then said datas (1b) are sent at the output of said device (50) after having been subjected to a digital-to-analog conversion, to an end user (13), characterized by the fact that said storage means are represented by a bank (4) of static storage cards (2,3) and said address storage means is formed by selecting units (8,9) and address switching circuits (7,11), said circuits determine at the output of said device (50), proceeding signals (18-18e,23-23e) which subdivide said storage cards (2,3) in writing and reading subdivisions due to driving signals (10a,10b,10c) sent to said storage cards by said microprocessor (10).

2. Electronic device according to claim 1, characterized by the fact that storage cells of the static storage cards (2,3) are singled out by address signals (14,19) coming from the selecting units (8,9) of the device (50).

3. Electronic device according to claim 1, characterized by the fact that the selecting units (8,9) have gate circuits (28,29,30,31) of the three-state buffer type, output signals are determined in parallel in said circuits, said signals activate and select the desired subdivision of celles of the static storage cards (2,3).

4. Electronic device according to claim 1, characterized by the fact that selecting units (8,9) are foreseen for each corresponding storage cards (2,3) of the storage bank (4).

5. Electronic device according to claim 1, characterized by the fact that the three-state buffers of the selecting units (8,9) arranged parallelly arranged in two by two for each selecting unit (8,9) allows, through a significative selecting word (28a,29a,30a,31a), to single out the desired subdivision.

6. Electronic device according to claim 1, characterized by the fact that the switching circuit (7) is suited for singling out the selecting storage card (2 or 3) from the selecting units (8,9).

7. Electronic device according to claim 1, characterized by the fact that at the output of the single static storage cards (2,3) it is foreseen a second switching circuit (11) for sending datas (5,6) to an analog-to-digital converter (12) at the output of the storage bank (4) of the static storage cards (2,3).

8. Electronic device according to claim 1, characterized by the fact that address selecting signals (14,19) are determined by a cascade of counters (33,34,35,36) circuitally connected to a decoder (38) prior a selecting signal (37a) sent by a PROM (37) located between the decoder (38) and said counters (33,34,35,36), that determines the address selecting signal (14,19).

9. Electronic device according to claim 1, characterized by the fact that the sampling frequency at the input of the device (50) varies according to sampling circuits (51) suited to reduce the frequency at the input of said device (50) according to sampling coefficients.

10. Electronic device according to claim 1, characterized by the fact that the sampling frequency is selected through a digital filter (42) located between a buffer (39) at the input of the device (50) and another buffer (43) at the output, an additional sampling frequency signal (49) is sent to said filter (42) through an electronic counter (44) that multiplies the value of the input frequency by the desired frequency value determining at the output of said counter (44) a signal (43a) at the sampling frequency of the signal (49) submultiple of the input frequency.

FIG.1

# FIG.3

FIG.4

FIG.5

FIG.2